# EUROPÄISCHE PATENTANMELDUNG

(11) **EP 1 180 501 A2**
(43) Veröffentlichungstag der Anmeldung: **20.02.2002**
(21) Anmeldenummer: 01119114.5
(22) Anmeldetag: 08.08.2001
(51) Int. Cl.: C04B 7/36

(54) **Verfahren zur Entschwefelung der Abgase einer Anlage zur Herstellung von Zementklinker**

(30) Priorität: 17.08.2000 DE 10040163
(71) Anmelder: KHD Humboldt Wedag AG, 51105 Köln (DE)
(72) Erfinder: Eckert, Carsten, 51061 Köln (DE); Hand, Andreas, 51103 Köln (DE); Kuhnke, Stephan, Dr., 50374 Erftstadt (DE); Streit, Norbert, 53721 Siegburg (DE)

(57) **Zusammenfassung**

Um bei einer Anlage zur Herstellung von Zementklinker aus Zementrohrmehl dafür zu sorgen, dass die Abgase der Zementklinkerproduktionslinie nicht nur eine Entstickung (NOₓ-Minderung), sondern in wirtschaftlicher Weise auch eine Entschwefelung erfahren, so dass auch schwefelreiche insbesondere sulfidischen Schwefel enthaltende Rohstoffe und/oder schwefelreiche Brennstoffe/Sekundärbrennstoffe eingesetzt werden können, ohne dass die Gefahr des Überschreitens von Schadstoffemissionsgrenzwerten besteht, wird erfindungsgemäß vorgeschlagen, wenigstens einen Teilstrom des in der Mischkammer (29) aus der Vorcalcinationsstufe (16) ausgeschleusten Grobkornmateriales (30) als Feststoffsorbens in das Abgas (22) nach dessen Abzug aus dem Zyklonschwebegas-Wärmetauschersystem und/oder in einen Teilgasabzug (38) des Drehofenabgases einzuführen zur Umsetzung der im Abgas enthaltenen Schwefeloxide zu Calciumsulfat (34), das anschließend vom Abgasstrom/Teilgasabzugsstrom abgetrennt wird.

## Beschreibung

Die Erfindung betrifft ein Verfahren zur Entschwefelung der Abgase einer Anlage zur Herstellung von Zementklinker aus Rohmehl, mit Rohmehlvorwärmer, Vorcalcinationsstufe, Drehrohrofen und Klinkerkühler, nach dem Oberbegriff des Anspruchs 1.

Um bei Anlagen zur Herstellung von Zementklinker aus Zementrohmehl unwirtschaftlich lange und/oder im Durchmesser große Drehrohröfen zu vermeiden und den spezifischen Wärmebedarf des Zementklinkerherstellungsprozesses niedrig zu halten, ist es bekannt, dem Drehrohrofen materialflussseitig gesehen eine Vorcalcinationsstufe vorzuschalten, die mit wenigstens einer Zweitfeuerung (neben der Feuerung im Drehrohrofen) ausgestattet ist. Bei der gemäß Oberbegriff des Anspruchs 1 als bekannt vorausgesetzten Vorcalcinationsstufe (EP-B-0 497 937) wird die mit Brennstoff und vorerhitztem Rohmehl versorgte Drehofenabgassteigleitung bzw. die darin geführte Gas-Feststoff-Suspension um 180° umgelenkt und zusammengefasst mit wenigstens einem Teilstrom der vom Klinkerkühler kommenden Tertiärluft in den untersten Zyklon des Zyklonschwebegas-Vorwärmersystems zwecks Abtrennung des hochgradig vorcalcinierten Rohmehls vom Gasstrom eingeführt. Vor dieser Zusammenfassung wird der in die Drehofenabgassteigleitung eingeführte Brennstoff an wenigstens einer DeNOₓ-Brennstelle unterstöchiometrisch, d. h. mit Sauerstoffunterschuss verbrannt zwecks Schaffung einer CO-haltigen Reduktionszone bzw. CO-Gassträhne zur Reduktion des Schadstoffes NOₓ, der insbesondere durch die Hochtemperaturverbrennung im Drehrohrofen gebildet worden ist (thermisches NOₓ), während der in den benachbarten Tertiärluftkanal eingeführte Brennstoff überstöchiometrisch, d. h. mit Sauerstoffüberschuss verbrannt wird. Das in der DeNOₓ-Reduktionszone des Drehofenabgaskanals nicht verbrauchte CO sowie in der Vorcalcinationsstufe ggf. zunächst nicht verbrannte Festbrennstoffpartikel werden dann suspensionsströmungsabwärts gesehen mittels überschüssigen Sauerstoffs aus dem Tertiärluftkanal nachverbrannt, wobei zur Förderung dieses Restausbrandes zwecks intensiver Vermischung der Reaktionspartner im Bereich der 180°-Strömungsumlenkung der schwanenhalsförmigen Vorcalcinationsstufe eine Wirbelkammer bzw. Mischkammer mit Abtrennung der Grobkornanteile aus der Gas-Feststoffsuspension angeordnet ist. Dabei werden bei der bekannten Vorcalcinationsstufe die aus der Mischkammer ausgetragenen Grobkornanteile in den aufsteigenden Rohrleitungsast und/oder in den absteigenden Rohrleitungsast der Vorcalcinationsstufe eingeführt.

Neben den Forderungen nach einer möglichst hochgradigen Vorcalcinierung des Zementrohmehls vor Einführung in den Drehrohrofen und nach niedrigen Abas-Emissionswerten bei den Schadstoffen NOₓ und CO werden die Erbauer und Betreiber von Zementklinkerproduktionslinien gleichzeitig mit immer schärferen Forderungen nach niedrigen Emissionswerten beim Schadstoff SOₓ wie z. B. SO₂ konfrontiert, besonders dann, wenn die Zementrohmaterialien viel pyritischen Schwefel bzw. sulfidische Mineralien enthalten und/oder schwefelhaltige Brennstoffe/Sekundärbrennstoffe eingesetzt werden. Der meist pyritische Schwefel (Pyrit, Markasit etc.) wird in den oberen Zyklonstufen des Zyklonschwebegas-Wärmetauschersystems bei Temperaturen von etwa 300 bis 700° C zu SO₂ umgesetzt und er ist hauptverantwortlich für die im Abgas der Zementklinkerproduktionslinie gemessenen SOₓ-Emissionen.

Zwecks Entschwefelung des Abgases einer Zementklinkerproduktionslinie ist es aus der US-A-4,634,583 bekannt, von dem CaO-haltigen Heißmehl, das vom untersten Zyklon des Zyklonschwebegas-Wärmetauschersystems in die Drehofeneinlaufkammer geleitet wird, einen Teilstrom abzuzweigen, abzukühlen, ggf. mit Wasser zu löschen und in eine im Abgasweg der Zementklinkerproduktionslinie angeordnete Reaktionskammer einzuführen zur Bindung der gasförmigen Schwefeloxide als Calciumsulfat, das vor der abschließenden Abgasreinigung wie elektrostatischen Staubabscheidung vom Abgas separat abgetrennt und als Gipskomponente verwertet werden kann, insbesondere als Zusatz bei der Mahlung des Zementklinkers zu Zement als Erstarrungsregler für den mit dem Zement herzustellenden Beton. Abgesehen von der Einrichtung zur Abgasentschwefelung weist diese bekannte Zementklinkerproduktionslinie eine Einrichtung zur Abgasentstickung mit DeNOₓ-Brennstelle nicht auf, schon gar nicht eine im Strömungsumlenkungsbereich an der höchsten Stelle der schwanenhalsförmigen Vorcalcinierstufe angeordnete Mischkammer zur Förderung des Restausbrandes insbesondere des im aufsteigenden Rohrleitungsast der Vorcalcinierstufe gebildeten CO noch innerhalb der Vorcalcinierstufe selbst.

Der Erfindung liegt die Aufgabe zugrunde, ausgehend von dem bekannten Verfahren zur Herstellung von Zementklinker der EP-B-0 497 937 dafür zu sorgen, dass die Abgase der Zementklinkerproduktionslinie nicht nur eine Entstickung (NOₓ-Minderung), sondern in wirtschaftlicher Weise auch eine Entschwefelung erfahren, so dass z. B. auch pyritische Rohmaterialien und/oder schwefelreiche Brennstoffe/Sekundärbrennstoffe eingesetzt werden können, ohne dass die Gefahr des Überschreitens von Schadstoffemissionsgrenzwerten besteht.

Diese Aufgabe wird erfindungsgemäß mit einem Verfahren mit den Maßnahmen des Anspruchs 1 gelöst. Vorteilhafte Ausgestaltungen der Erfindung sind in den Unteransprüchen angegeben.

Beim erfindungsgemäßen Verfahren wird wenigstens ein Teilstrom des in der Mischkammer aus der Vorcalcinationsstufe ausgeschleusten Grobkornmateriales, wobei die Mischkammer an der höchsten Stelle der schwanenhalsförmigen Vorcalcinationsstufe angeordnet ist, sinnvoll verwertet, nämlich als Feststoffsorbens in das Abgas nach dessen Abzug aus dem Zyklonschwebegaswärmetauschersystem und/oder in einen Teilgasabzug des Drehofenabgases - sofern die Zementklinkerproduktionslinie zwecks Reduzierung von Schadstoffkreisläufen wie Alkalikreisläufen und Schwefelkreisläufen mit einem Bypassgasabzug bzw. Teilgasabzug ausgestattet ist - eingeführt zur Umsetzung der im Abgas enthaltenen Schwefeloxide zu Calciumsulfat, das anschließend vom Abgasstrom bzw. vom Teilgasabzugsstrom abgetrennt wird. Das über die Mischkammer aus der Vorcalcinationsstufe ausgeschleuste CaO-haltige Grobkornmaterial kann vor seinem Einsatz als Feststoffsorbens zwecks Erhöhung seiner Reaktivität durch Wasserzugabe zumindest teilweise in hochreaktives Kalkhydrat Ca(OH)₂ umgewandelt und dabei auch gekühlt werden, und zwar auf eine Temperatur von zweckmäßigerweise etwa 280 bis etwa 360° C, das ist die Temperatur, mit der die Abgase der Zementklinkerproduktionslinie oben das Zyklonschwebegas-Wärmetauschersytem verlassen. Weil die an der höchsten Stelle im Umlenkbereich der schwanenhalsförmigen Calcinierstufe gelegene Mischkammer im Turmgebäude des Schwebegaswärmetauschersystems bereits sehr hoch liegt, muss nur wenig Hubarbeit geleistet werden, um das in der Mischkammer ausgefallene CaO-haltige Grobkornmaterial bzw. nach Umwandlung das Kalkhydrat an die Stelle zu fördern, an welcher dieses Feststoffsorbens in die vom Wärmetauschersystem kommende Abgasleitung eingedüst wird, so dass ein sehr langer sich praktisch über die gesamte Bauhöhe des Zyklonschwebegas-Wärmetauschersystems erstreckender Weg zur Durchführung der Gasentschwefelungsreaktion zur Verfügung steht. Diese Abgasleitung verläuft vom obersten Wärmetauscherzyklon nach unten bis zum auf dem Fundament installierten Abgas-Saugzuggebläse. Die lange Strecke der Abgasentschwefelungsreaktion von z. B. 40 bis 50 m ermöglicht eine hochgradige Abgasentschwefelung.

Weil das aus dem Wirbel in der Mischkammer ausgefallene Grobkornmaterial, das aus dem Umlenkbereich der Vorcalcinationsstufe als Feststoffsorbens abgezogen wird, mit einer Korngrößenverteilung in einem Bereich von etwa 50 bis etwa 500 µm liegt, wobei die in einem üblichen Zyklonabscheider aus der Gas-Feststoffsuspension üblicherweise mit abgeschiedenen noch feineren Kornanteile bei der beim erfindungsgemäßen Verfahren eingesetzten Mischkammer nicht abgeschieden werden, wird die Möglichkeit eröffnet, dass das mit SOₓ-beladene Feststoffsorbens, hauptsächlich CaSO₄, weitgehend für sich separat aus dem Abgas in einem Abscheidezyklon abgetrennt und verwertet werden kann, bevor das entschwefelte Abgas in einer Feinstaub-Entstaubungseinrichtung, insbesondere elektrostatischen Staubabscheider abschließend entstaubt wird. Die Verwertungsmöglichkeiten des vom Abgas abgetrennten CaSO₄ sind: Verwertung als REA-Gips, Zuschlagung zur Zementklinkermahlung und/oder Zuschlagung zum Zementrohmehl.

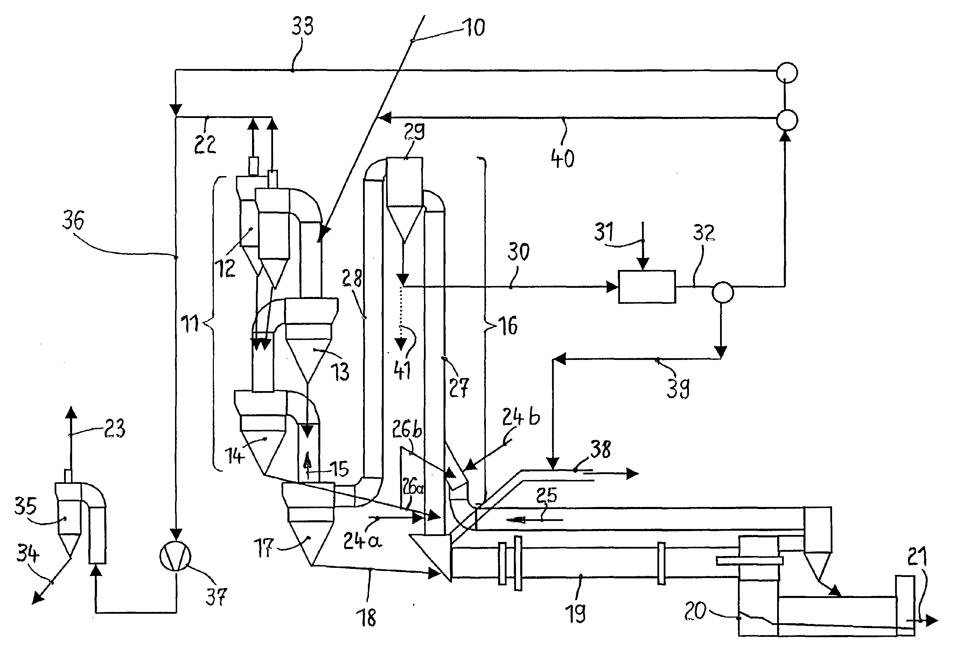

Die Erfindung und deren weitere Merkmale und Vorteile werden anhand des in der Zeichnung schematisch dargestellten Ausführungsbeispieles näher erläutert.

Die Zeichnung zeigt in schematischer Darstellung eine zur Durchführung des erfindungsgemäßen Verfahrens geeignete Anlage zur Herstellung von Zementklinker aus Zementrohmehl 10, das in die Vorwärmstufe 11 oben aufgegeben wird, wo es nacheinander die Zyklonschwebegas-Wärmetauscher 12, 13, 14 im kombinierten Gleich/-Gegenstrom zum heißen Abgas 15 einer Vorcalcinationsstufe 16 durchwandert, um im untersten Zyklon 17 vom heißen Abgasstrom 15 abgetrennt und als hochgradig (z. B. 95°) calciniertes Zementrohmehl 18 in die Einlaufkammer des Drehrohrofens 19 eingeführt zu werden, in dessen Sinterzone es zu Zementklinker gebrannt wird, der anschließend in einem Klinkerkühler 20, z. B. Rostkühler abgekühlt wird. Der abgekühlte Zementklinker verlässt den Kühler 20 bei 21.

Das am Zementrohmehl abgekühlte Abgas verlässt die Vorwärmstufe 11 bei 22 mit einem Temperaturniveau von etwa 280 bis 360° C. Dieses Abgas 22 wird nach Durchströmung einer nachfolgend beschriebenen Abgasentschwefelung über Leitung 23 einem nicht dargestellten Staubabscheider, in der Regel elektrostatischen Staubabscheider (Elektrofilter) zugeführt, dort von Staub befreit und anschließend über einen in der Zeichnung ebenfalls nicht dargestellten Hauptkamin als gereinigtes Abgas abgezogen.

In der mit Brennstoff 24a, 24b und Tertiärluft 25 des Klinkerkühlers 20 versorgten Vorcalcinationsstufe 16 wird das aus der zweituntersten Zyklonstufe 14 austretende vorgewärmte Zementrohmehl 26a, 26b hochgradig calciniert. Dabei wird der Brennstoff 24a an wenigstens einer sogenannten DeNOₓ-Brennstelle in der vom Drehrohrofen 19 kommenden Ofenabgassteigleitung mit Vorteil unterstöchiometrisch verbrannt zwecks Erzeugung einer CO-haltigen Reduktionszone zur Reduktion des im Drehofenabgas enthaltenen Schadstoffs NOₓ, während der Brennstoff 24b in der vom Klinkerkühler kommenden Tertiärluft 25 mit Vorteil überstöchiometrisch verbrannt wird. Der Restausbrand des in der NOₓ-Reduktionszone zunächst überschüssig gebliebenen CO und ggf. unverbrannt gebliebener Kohlenwasserstoffe kann durch Sauerstoff aus überschüssiger Tertiärluft 25 sowie ggf. aus einem weiteren Tertiärluft-Teilstrom erfolgen. Zwecks intensiver Vermischung der Reaktionspartner zur Förderung des Restausbrandes ist im Bereich der Strömungsumlenkung der schwanenhalsförmigen Vorcalcinationsstufe 16 vom aufsteigenden Rohrleitungsast 27 um etwa 180° in den absteigenden Rohrleitungsast 28 noch eine Wirbelkammer bzw. Mischkammer 29 angeordnet, in der die Gas-Feststoffsuspension intensiv vermischt wird, was einen vollständigen Restausbrand der im absteigenden Ast 28 der Vorcalcinationsstufe 16 noch vorhandenen Brennstoffe zur Folge hat. Dabei ist die Mischkammer 29 mit tangentialem Eintritt und Austritt der Gas-Feststoffsuspension so ausgebildet, dass sie nur einen sehr geringen zusätzlichen Druckverlust verursacht. In der Mischkammer 29 fällt ein Teil des in der Gas-Feststoffsuspension enthaltenen Grobkorns mit einer Korngröße von etwa 50 bis etwa 500 µm aus der Suspension aus und wird über Leitung 30 abgezogen.

Dieses aus der Mischkammer 29 der Vorcalcinationsstufe 16 ausgeschleuste Grobkornmaterial 30 enthält hohe Anteile an CaO und es wird erfindungsgemäß zur Entschwefelung des bzw. der Abgase der Zementklinkerproduktionslinie genutzt. Dazu wird das Grobkornmaterial 30 durch Wasserzugabe 31 mit Vorteil zumindest teilweise zunächst in hochreaktives Kalkhydrat Ca(OH)₂ 32 umgewandelt und abgekühlt und als Feststoffsorbens über Leitung 33 in das oben vom Zyklonschwebegas-Wärmetauschersystem abgezogene Abgas 22 eingedüst zur Umsetzung der im Abgas enthaltenen Schwefeloxide zu Calciumsulfat CaSO₄ 34, das in einem Zyklonabscheider 35 vom dann entschwefelten Abgasstrom 23 abgetrennt wird. Für die Abgasentschwefelungsreaktion steht also die lange Reaktionsstrecke von z. B. 40 bis 50 m der Abgasleitung 36 zur Verfügung, die über die gesamte Höhe des Turmes des Zyklonschwebegas-Wärmetauschersystems nach unten bis zu dem auf dem Fundament installierten Abgas-Saugzuggebläse 37 verläuft.

Beim erfindungsgemäßen Verfahren fällt also ein Abgas 23 an, dessen Emissionswerte sowohl bei NOₓ als auch bei SOₓ minimiert sind, selbst bei Einsatz schwefelreicher Stoffe wie z. B. pyritischer Rohmaterialien. Gleichzeitig wird das in der Mischkammer 29 der Vorcalcinationsstufe 16 anfallende Grobkornmaterial 30 sehr nutzbringend entsorgt und verwertet, nämlich zur Trockensorption der Zementwerksabgase.

Die Menge an dem in das Abgas 22 einzuführenden Feststoffsorbens 33 kann durch eine Mess-/Regeleinrichtung dadurch geregelt werden, dass bei ansteigendem SOₓ(SO₂)-Gehalt im Abgas die jeweils eingedüste Menge an Feststoffsorbens 33 erhöht wird, und umgekehrt. Überschüssige Mengen an Sorbens 30 können zum Rohmehl 10 rezirkuliert (Leitung 40) und/oder aus dem Prozess ausgeschleust (Leitung 41) werden.

Ist die Zementklinkerproduktionslinie zur Reduzierung von Alkalikreisläufen und/oder von inneren Schwefelkreisläufen noch mit einem Bypassgasabzug bzw. Teilgasabzug 38 aus der Drehofeneinlaufkammer ausgestattet, so kann auch dieses Bypassgas durch Trockensorption entschwefelt werden, indem ein Teil des hochreaktiven Sorbens von der Leitung 32 abgezweigt und über Leitung 39 in das Bypassgas eingeführt wird.

Das vom Zementwerksabgas 22 abgetrennte CaSO₄-haltige Feststoffsorbens 34 sowie auch das ggf. aus dem Bypassgas 38 erhaltene beladene Feststoffsorbens kann der Zementklinkermahlung und/oder dem Zementrohmehl zugeschlagen werden oder auch als REA-Gips anderweitig verwertet werden.

## Patentansprüche

1. Verfahren zur Entschwefelung der Abgase einer Anlage zur Herstellung von Zementklinker aus Rohmehl (10), das in wenigstens einem vom Abgas eines Drehrohrofens (19) durchströmten Wärmetauscherstrang insbesondere Zyklonschwebegaswärmetauschersystem vorerhitzt, in einer Vorcalcinationsstufe (16) calciniert und in der Sinterzone des Drehrohrofens zu Zementklinker gebrannt wird, der in einem nachgeschalteten Kühler (20) gekühlt wird, wobei zur Rohmehlcalcinierung der Abgasstrom des Drehrohrofens und ein Abluftstrom (Tertiärluft) des Klinkerkühlers getrennt oder gemeinsam in der mit Brennstoff versorgten rohrförmigem Vorcalcinationsstufe (16) genutzt werden, in deren Strömungsumlenkbereich vom aufsteigenden Rohrleitungsast in den absteigenden Rohrleitungsast zur Förderung des Brennstoff-Restausbrandes eine Wirbelkammer bzw. Mischkammer (29) mit Abtrennung der Grobkornanteile (30) aus der Gas-Feststoff-suspension angeordnet ist,
**dadurch gekennzeichnet, dass** wenigstens ein Teilstrom des in der Mischkammer (29) aus der Vorcalcinationsstufe (16) ausgeschleusten Grobkornmateriales (30) als Feststoffsorbens in das Abgas (22) nach dessen Abzug aus dem Zyklonschwebegaswärmetauschersystem und/oder in einen Teilgasabzug (38) des Drehofenabgases eingeführt wird zur Umsetzung der im Abgas enthaltenen Schwefeloxide zu Calciumsulfat (34), das anschließend vom Abgasstrom/Teilgasabzugsstrom abgetrennt wird.

2. Verfahren nach Anspruch 1,
**dadurch gekennzeichnet, dass** das aus der Mischkammer (29) ausgeschleuste CaO-haltige Grobkornmaterial (30) vor seinem Einsatz als Feststoffsorbens durch Wasserzugabe zumindest teilweise in hochreaktives Kalkhydrat Ca(OH)₂ (32) umgewandelt und gekühlt wird.

3. Verfahren nach den Ansprüchen 1 oder 2,
**dadurch gekennzeichnet, dass** die Korngrößenverteilung des Feststoffsorbens in einem Bereich von etwa 50 bis etwa 500 µm gehalten wird.

4. Verfahren nach einem oder mehreren der Ansprüche 1 bis 3,
**dadurch gekennzeichnet, dass** bei ansteigendem SOₓ-Gehalt im Zementwerksabgas bzw. Teilgasabzug die jeweils eingedüste Menge an Feststoffsorbens erhöht wird, und umgekehrt.

5. Verfahren nach einem der Ansprüche 1 bis 4,
**dadurch gekennzeichnet, dass** das vom Zementwerksabgas/Teilgasabzug abgetrennte CaSO₄-haltige Feststoffsorbens (34) der Zementklinkermahlung und/oder dem Zementrohmehl zugeschlagen wird oder anderweitig verwertet wird.
